# EUROPÄISCHE PATENTSCHRIFT

(11) **EP 2 356 326 B1**
(45) Veröffentlichungstag und Bekanntmachung des Hinweises auf die Patenterteilung: **03.07.2013**
(21) Anmeldenummer: 09799483.4
(22) Anmeldetag: 02.12.2009
(51) Int. Cl.: F02B 25/18, F02F 3/00, F02F 3/24, F02B 23/10, F02F 1/22

(54) **ZWEITAKT-VERBRENNUNGSMOTOR**
TWO-CYCLE COMBUSTION ENGINE
MOTEUR A COMBUSTION INTERNE A DEUX TEMPS

(30) Priorität: 02.12.2008 AT 18752008
(43) Veröffentlichungstag der Anmeldung: 17.08.2011
(73) Patentinhaber: Kirchberger, Roland, 8052 Graz (AT)
(72) Erfinder: GANGLMAYR, Josef, A-4631 Krenglbach (AT)
(74) Vertreter: Hübscher, Helmut
(86) Internationale Anmeldenummer: PCT/AT2009/000466
(87) Internationale Veröffentlichungsnummer: WO 2010/063048

(56) Entgegenhaltungen:
- EP-A1- 0 742 366
- EP-A2- 0 302 045
- WO-A1-2006/007614
- GB-A- 2 199 617
- US-A1- 2003 116 107
- US-A1- 2003 209 214
- US-A1- 2006 272 600

## Beschreibung

### Technisches Gebiet

Die Erfindung bezieht sich auf einen Zweitakt-Verbrennungsmotor mit wenigstens einem einen Kolben aufnehmenden, mit einem Zylinderkopf versehenen Zylinder, mit einem Kurbelgehäuse, das mit dem Zylinder über Überströmkanäle strömungsverbunden ist, die einander symmetrisch bezüglich einer durch die Achse eines Auslasskanals bestimmten Durchmesserebene des Zylinders gegenüberliegen, und mit zwei zu dieser Durchmesserebene symmetrisch angeordneten Einspritzdüsen für Kraftstoff, deren Düsenachsen einander in der unteren Totpunktlage des Kolbens oberhalb des Kolbenbodens in der Durchmesserebene schneiden.

### Stand der Technik

Da übliche Einspritzdüsen Kraftstoff nur in einem begrenzten Mengenbereich je Einspritzzyklus zur Verfügung stellen können, ist es insbesondere für leistungsstarke Zweitakt-Verbrennungsmotoren bekannt (EP 0 302 045 A2, EP 0 591 509 B1), zwei Einspritzdüsen vorzusehen, sodass bei einem geringen Kraftstoffbedarf im Leerlauf und im unteren Teillastbereich eine Einspritzdüse, im oberen Teillastbereich und bei Volllast jedoch beide Einspritzdüsen beaufschlagt werden. Sind dabei die Einspritzdüsen so angeordnet, dass sie symmetrisch zu beiden Seiten einer durch die Achse des Auslasskanals bestimmten Durchmesserebene liegen, wobei sich die Düsenachsen in der Zylinderachse schneiden (EP 0 591 509 B1), so ergeben sich im höheren Leistungsbereich beim Einsatz beider Einspritzdüsen für die Kraftstoffverteilung im Brennraum günstige symmetrische Verhältnisse, nicht aber im Leerlauf und im unteren Teillastbereich, wenn nur eine Einspritzdüse zum Einsatz kommt. Außerdem weisen die beiden Kraftstoffstrahlen nach ihrem Aufeinandertreffen im Bereich der Zylinderachse und dem dadurch bedingten Auffächern der Kraftstoffströmung eine erhebliche Strömungskomponente in Richtung gegen den Auslasskanal auf, was einerseits zu Spülverlusten und anderseits zu einer erhöhten Kohlenwasserstoffemission führt, weil die aus dem Kurbelgehäuse über die Überströmkanäle quer zur Kraftstoffströmung in den Brennraum eindringende Luft eine Benetzung des Kolbenbodens mit Kraftstoff nicht verhindern kann, der über den Kolbenboden gegen die Zylinderwände abfließt.

Westerkin offenbart US 2003/116107 einen Zweitakt-Verbrennungsmotor mit mehrenen Einspritzdüsen.

Werden die Einspritzdüsen unsymmetrisch angeordnet, sodass eine Einspritzdüse in der durch die Achse des Auslasskanals bestimmten Durchmesserebene des Zylinders liegt, während die andere Einspritzdüse mit einer Winkelversetzung auf einer Seite dieser Durchmesserebene so ausgerichtet wird, dass sich die Düsenachsen der beiden Einspritzdüsen auf der vom Auslasskanal abgewandten Seite der Zylinderachse schneiden, und zwar in der unteren Totpunktlage des Kolbens unterhalb des Kolbenbodens (EP 0302045 A2), so können nur im Leerlauf und im unteren Teillastbereich symmetrische Verhältnisse für die Gemischaufbereitung sichergestellt werden, nicht im Volllastbereich. Dazu kommt, dass aufgrund der Düsenausrichtung gegen den Kolbenboden dessen Benetzung mit Kraftstoff angestrebt wird, um eine entsprechende Verdampfung des Kraftstoffs auf dem heißen Kolbenboden zu ermöglichen, doch hat sich gezeigt, dass die hiefür innerhalb der Takte zur Verfügung stehende Zeit nicht ausreicht und daher die Nachteile der mit Kraftstoff benetzten Kolben- und Zylinderwandflächen insbesondere hinsichtlich der Kohlenwasserstoffemissionen durchschlagen.

### Darstellung der Erfindung

Der Erfindung liegt somit die Aufgabe zugrunde, einen Zweitakt-Verbrennungsmotor der eingangs geschilderten Art so auszugestalten, dass sich eine vorteilhafte Gemischbildung sowohl im Leerlauf und im unteren Teillastbereich als auch im Volllastbereich ergibt, und zwar bei einer Verringerung der Spülverluste und der Kohlenwasserstoffemissionen.

Die Erfindung löst die gestellte Aufgabe dadurch, dass die Düsenachsen einander auf der vom Auslasskanal abgewandten Seite der Zylinderachse schneiden und zumindest angenähert in Ausströmrichtung der jeweils auf der gegenüberliegenden Seite der Durchmesserebene vorgesehenen Überströmkanäle verlaufen und dass der Kolben auf einer zumindest einer der Einspritzdüsen zugekehrten Umfangsseite eine Mantelöffnung zum Einspritzen von Kraftstoff in das Kurbelgehäuse aufweist.

Durch die Ausrichtung der Düsenachsen gegenüber der Ausströmrichtung des jeweils gegenüberliegenden Überströmkanals kann zwischen der in Richtung der Düsenachse eingespritzten Kraftstoffströmung und der aus dem jeweils gegenüberliegenden Überströmkanal in den Brennraum einströmenden Luft die aufgrund der entgegengerichteten Geschwindigkeitskomponenten jeweils größte Relativgeschwindigkeit für die Kraftstoffaufbereitung genützt werden, was im Zusammenwirken mit der Anordnungssymmetrie beim Einsatz beider Einspritzdüsen und damit im Bereich höherer Teillasten und im Volllastbetrieb zu einer vorteilhaften Gemischverteilung im Brennraum führt. Der Schnittpunkt der Düsenachsen auf der vom Auslasskanal abgewandten Seite der Zylinderachse verlagert die für die Gemischaufbereitung wesentliche Auffächerung der eingespritzten Kraftstoffstrahlen mit Hilfe der durch die Überströmkanäle gegensinnig zum Kraftstoff eingeblasenen Luft in die vom Auslasskanal abgekehrte Zylinderhälfte, sodass Spülverluste weitgehend vermieden werden können. In diesem Zusammenhang ist zu bedenken, dass die Kraftstoffstrahlen und die entgegengerichteten Luftströmungen oberhalb des Kolbenbodens aufeinandertreffen, was zu einer vom Kolbenboden weg gegen den Zylinderkopf gerichteten Strömung des sich bildenden Gemischs führt und daher eine Kohlenwasserstoffemissionen bedingende Benetzung des Kolbenbodens mit Kraftstoff verhindert.

Wird für den Leerlauf und den unteren Teillastbereich nur eine Einspritzdüse eingesetzt, so wird der Kraftstoff durch diese Einspritzdüse nicht in den Brennraum oberhalb des Kolbenbodens, sondern in an sich bekannter Weise (AT 503 127 B1) durch eine Mantelöffnung des Kolbens auf der der Einspritzdüse zugekehrten Umfangsseite in das Kurbelgehäuse eingespritzt. Durch die Strömungsbewegung im Kurbelgehäuse und an der Kolbenunterseite kommt es zu einer weitgehenden Gleichverteilung des eingespritzten Kraftstoffs und in folge zu einem gleichmäßigen Eintrag des Kraftstoffluftgemischs durch die Überströmkanäle in den Brennraum des Zylinders. Damit ist auch im Leerlauf und im unteren Teillastbereich eine symmetrische Kraftstoffverteilung im Brennraum gewährleistet.

Zur Unterstützung einer vorteilhaften Gemischaufbereitung beim Einsatz beider Einspritzdüsen kann auf der dem Auslasskanal diametral gegenüberliegenden Seite des Zylinders ein als Aufrichtkanal ausgebildeter Überströmkanal mit einer gegen den Zylinderkopf gerichteten, in der Durchmesserebene liegenden Ausströmrichtung vorgesehen werden, die oberhalb des Schnittpunkts der Düsenachsen verläuft. Durch die Strömung dieses Aufrichtkanals, die auf die Strahlen des eingespritzten Kraftstoffs trifft, bevor die Kraftstoffhauptstrahlen aufeinanderstoßen, ergibt sich zusammen mit den Strömungen aus den symmetrisch zur Durchmesserebene angeordneten Überströmkanälen eine gegen den Zylinderkopf gerichtete, vereinigte Gasströmung, in der der Kraftstoff fein verteilt wird.

Um für die Einspritzung des Kraftstoffs vorteilhafte Druckverhältnisse im Zylinder zu erreichen, können die Düsenachsen der Einspritzdüsen die Zylinderinnenfläche der Höhe nach zwischen den Steuerkanten der Überströmkanäle und des Auslasskanals schneiden. Die Einspritzdüse wird demnach nur mit den geringen Drücken am Ende der Expansionsphase belastet. Außerdem wird die Temperatur durch die einströmende Frischluft niedrig gehalten, sodass eine Verkokung im Düsenbereich wirksam unterbunden werden kann. Die auf die Steuerkanten der Überströmkanäle und des Auslasskanals bezogene Höhenlage der Einspritzdüsen erlaubt auch für die Gemischaufbereitung im Brennraum vorteilhafte Neigungswinkel der Düsenachsen und davon abhängig der Ausströmabschnitte der Überströmkanäle.

Geht wenigstens einer der Überströmkanäle von einer im Zylinder vorgesehenen Einströmöffnung aus, die im Hublagenbereich des Kolbens für den geöffneten Überströmkanal einer Mantelöffnung des Kolbens gegenüberliegt, so stellt sich innerhalb des Kolbens eine erhöhte Gasströmung mit der Wirkung ein, dass sich im Kolbenbereich keine höhere Kraftstoffkonzentration aufbauen kann, womit alle mit einer Kraftstoffanreicherung im Kolbenbereich verbundenen Nachteile entfallen.

### Kurze Beschreibung der Zeichnung

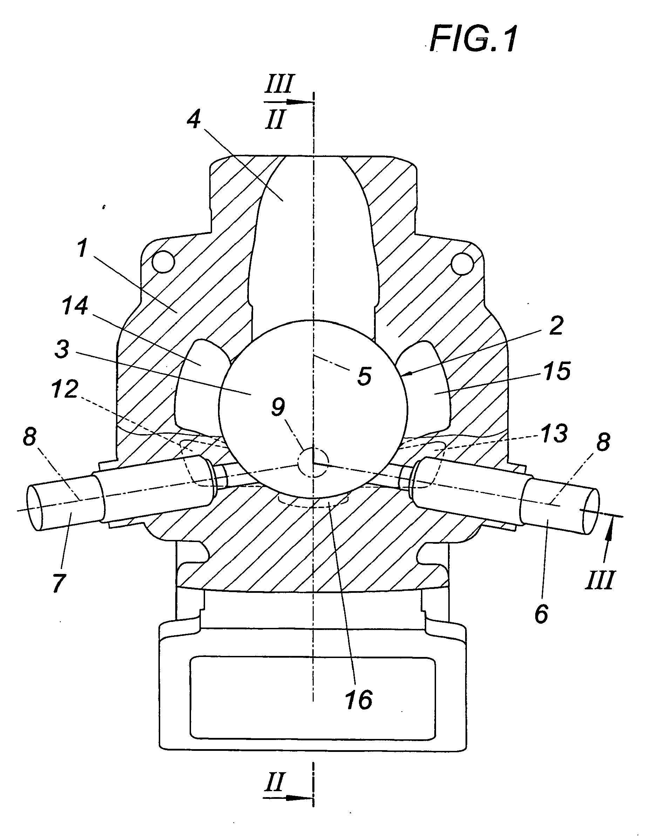

In der Zeichnung ist der Erfindungsgegenstand beispielsweise dargestellt. Es zeigen
- Fig. 1: einen erfindungsgemäßen Zweitakt-Verbrennungsmotor in einem Querschnitt im Bereich der Ausströmöffnungen der Überströmkanäle,

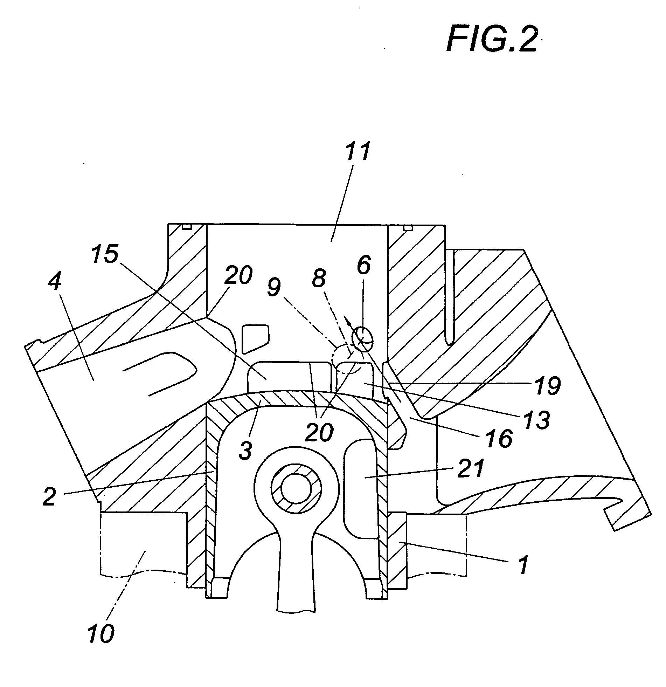

- Fig. 2: einen Schnitt nach der Linie II-II der Fig. 1,
- Fig. 3: einen Schnitt nach der Linie III-III der Fig. 1,
- Fig. 4: einen Schnitt nach der Linie IV-IV der Fig. 3 und die
- Fig. 5: und 6 einen schnitt nach der Linie V-V der Fig. 1 mit dem Kolben in der unteren und der oberen Totpunktstellung.

### Weg zur Ausführung der Erfindung

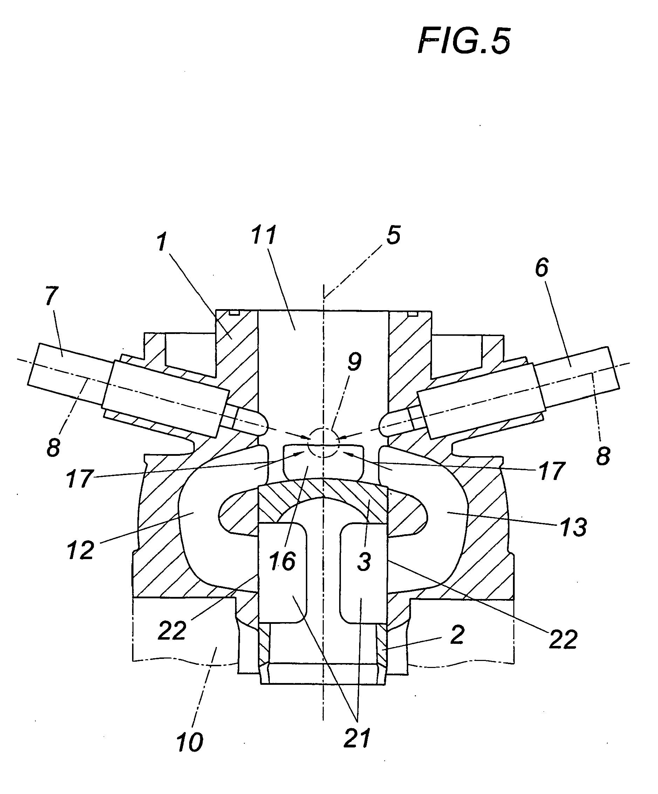

Vom Motorblock eines Zweitakt-Verbrennungsmotors ist in der Zeichnung lediglich ein Zylinder 1 ohne Zylinderkopf angedeutet. Der in der unteren Totpunktlage gezeichnete Kolben ist mit 2 bezeichnet und weist einen Kolbenboden 3 auf. Auf der dem Auslasskanal 4 gegenüberliegenden Zylinderseite sind symmetrisch zu einer durch die Achse des Auslasskanals 4 bestimmten Durchmesserebene 5 zwei Einspritzdüsen 6, 7 vorgesehen, deren Düsenachsen 8 sich in der Durchmesserebene 5 schneiden, und zwar in einem Schnittpunkt 9, der unteren Totpunktlage des Kolbens 2 oberhalb des Kolbenbodens 3 liegt, wie dies insbesondere der Fig. 5 entnommen werden kann.

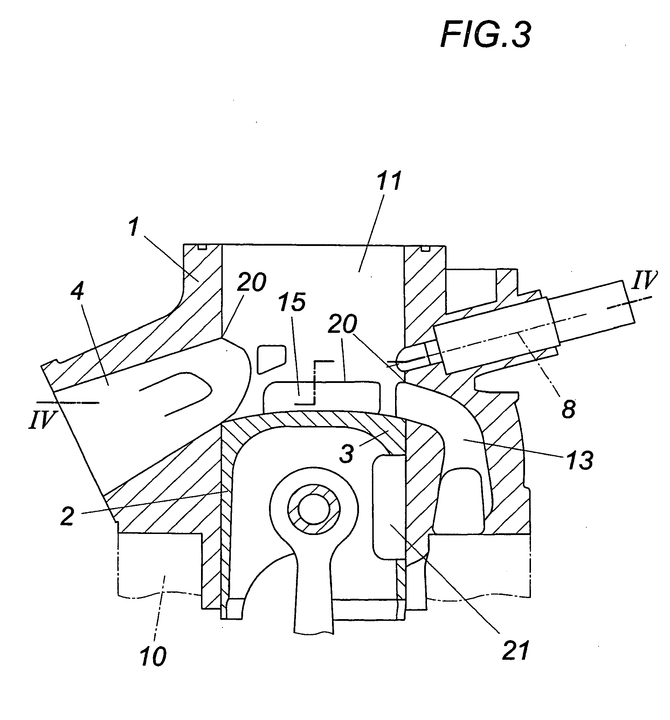

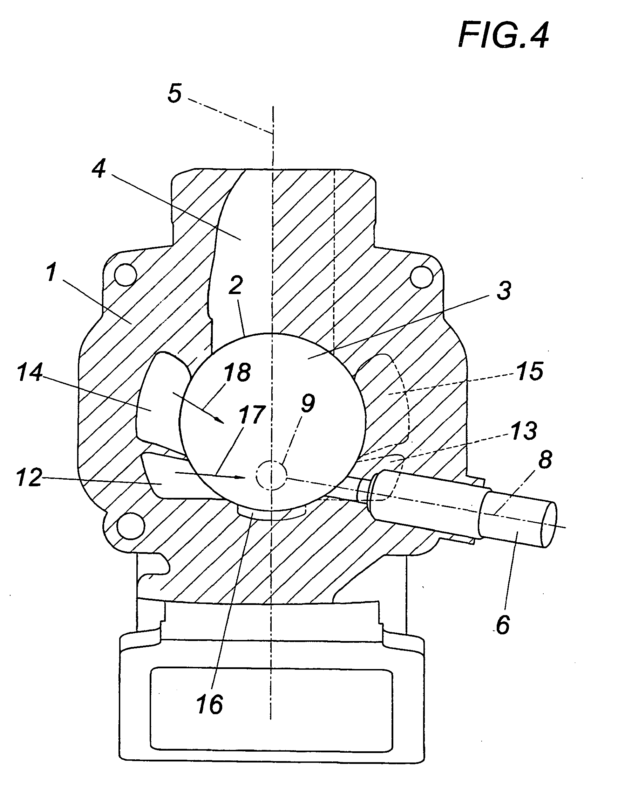

Zwischen dem Kurbelgehäuse 10 und dem Verbrennungsraum 11 des Zylinders 1 sind einander paarweise gegenüberliegende, symmetrisch zur Durchmesserebene 5 angeordnete Überströmkanäle 12, 13 und 14, 15 vorgesehen. Zusätzlich weist der Zylinder 1 einen dem Auslasskanal 4 diametral gegenüberliegenden Überströmkanal als Aufrichtkanal 16 auf, der zwischen den Einspritzdüsen 6, 7 in den Verbrennungsraum 11 mündet, wie dies insbesondere den Fig. 3 und 4 entnommen werden kann. Die Anordnung ist dabei so getroffen, dass die Düsenachsen 8 im Wesentlichen einem der beiden auf der bezüglich der Durchmesserebene 5 gegenüberliegenden Zylinderseite mündenden Überströmkanäle 12, 13 bzw. 14, 15 entgegengerichtet ist, dass also die Ausströmrichtung 17 der Überströmkanäle 12, 13 oder die Ausströmrichtung 18 der Überströmkanäle 14, 15 in Richtung der Düsenachse 8 der jeweils gegenüberliegenden Einspritzdüsen 6, 7 verlaufen. Im vorliegenden Ausführungsbeispiel sind die Überströmkanäle 12, 13 in ihrem Mündungsbereich den Einspritzdüsen 6, 7 entgegengerichtet, wie dies aus den Fig. 4 und 5 ersichtlich wird. Durch diese Maßnahme wird eine vorteilhafte Auffächerung des eingespritzten Kraftstoffstrahls und eine feine Verteilung des Kraftstoffs innerhalb der Gasströmung erreicht, weil aufgrund der dem Kraftstoffstrahl entgegengerichteten Luftströmung aus den jeweils gegenüberliegenden Überströmkanälen 12, 13 die höchste Relativgeschwindigkeit zwischen Kraftstoffstrahl und Luftströmung für die Kraftstoffverteilung genützt werden kann. Die Ausrichtung der Düsenachsen 8 in der Weise, dass deren Schnittpunkt 9 in der unteren Totpunktlage des Kolbens 2 oberhalb des Kolbenbodens 3 zu liegen kommt, verhindert eine Benetzung des Kolbenbodens mit Kraftstoff, der durch die über die Überströmkanäle 12, 13 bzw. 14, 15 in den Verbrennungsraum 11 eingeblasene Frischluft gegen den Zylinderkopf weg vom Kolbenboden 3 mitgerissen wird, was eine vorteilhafte Kraftstoffverteilung im Verbrennungsraum 11 nach sich zieht, insbesondere, wenn die Ausströmrichtung 19 des Aufrichtkanals 16 oberhalb des Schnittpunkts 9 der Düsenachsen 8 verläuft (Fig. 3), weil in diesem Fall die Frischluft aus dem Aufrichtkanal 16 auf die Kraftstoffstrahlen auftritt, bevor sich die Hauptströme dieser Kraftstoffstrahlen vereinigen, sodass die Ableitung des Kraftstoffs vom Kolbenboden 3 bereits durch die Luftströmung aus dem Aufrichtkanal 16 eingeleitet und unterstützt wird. Der Gefahr, dass Kraftstoff teilweise mit dem Abgas durch den Auslasskanal 4 ausgetragen wird, wird dadurch begegnet, dass der Schnittpunkt 9 der Düsenachsen 8 auf der dem Auslasskanal 4 abgewandten Seite der Zylinderachse liegt und folglich die entstehenden Gastströmungen den über die Einspritzdüsen 6, 7 eingespritzten Kraftstoff vom Auslasskanal 4 weg gegen den Zylinderkopf hin mitreißen.

Damit vorteilhafte Druckverhältnisse für die Kraftstoffeinspritzung genützt werden können, schneiden die Düsenachsen 8 die Zylinderinnenfläche der Höhe nach zwischen den Steuerkanten 20 der Überströmkanäle 12, 13, 14, 15 und des Auslasskanals 4, wie dies aus der Fig. 3 hervorgeht. Diese Anordnung stellt sicher, dass die Einspritzdüsen 6, 7 nur mit den geringen Drücken am Ende der Expansionsphase belastet und vor Verbrennungsrückständen durch Ablagerungen bewahrt werden, weil die hiefür erforderliche Verkokungstemperatur durch die über den Aufrichtkanal 16 einströmende und die heißen Abgase aus dem Düsenbereich verdrängende Frischluft nicht erreicht wird.

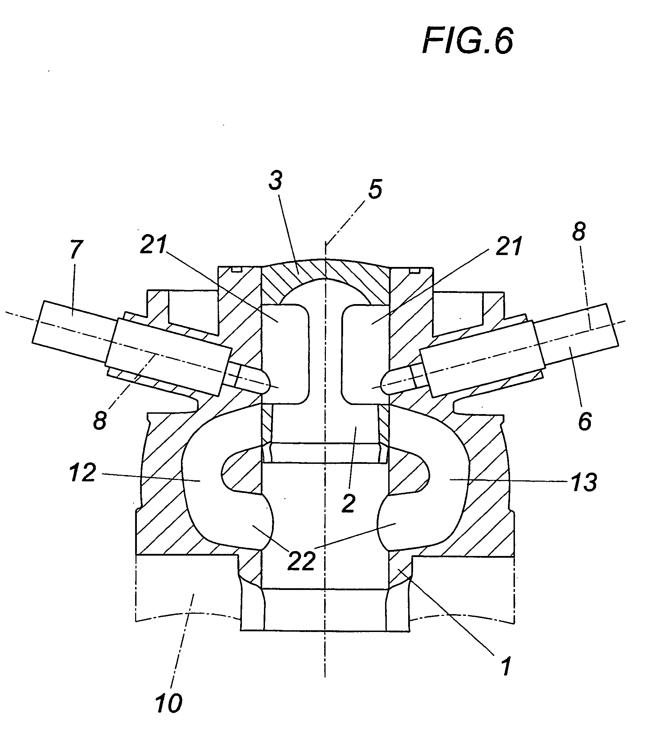

Um im Leerlauf und im unteren Teillastbereich nur eine Einspritzdüse einsetzen zu können, ohne eine unsymmetrische Kraftstoffverteilung im Verbrennungsraum 11 befürchten zu müssen, kann der Kraftstoff beim Einsatz nur einer Einspritzdüse durch eine Mantelöffnung 21 in den Kolben 2 eingespritzt werden, wie dies in der Fig. 6 angedeutet ist. Eine solche Kraftstoffeinspritzung bedingt eine entsprechende Ansteuerung beispielsweise der Einspritzdüse 6 während der Verdichtungsphase. Obwohl in der Mehrzahl der Fälle die Kraftstoffeinspritzung in den Kolben 2 nur durch eine der Einspritzdüsen 6, 7 erfolgen wird, können auch beide Einspritzdüsen 6, 7 entsprechend angesteuert werden, wenn der Kolben 2 zwei je einer Einspritzdüse 6, 7 zugehörige Mantelöffnungen 21 aufweist. Durch die Einbringung des Kraftstoffs über den Kolben 2 in das Kurbelgehäuse 10 wird der Kraftstoff mit der in das Kurbelgehäuse 10 angesaugten Frischluft vermengt und über die Überströmkanäle 12 bis 16 in den Verbrennungsraum 11 gefördert, wobei sich eine entsprechende Gleichverteilung des Kraftstoffs aufgrund der Gasströmungen einstellt. Es besteht allerdings die Gefahr, dass sich an der Kolbenunterseite im Bereich des Kolbenbodens 3 eine an Kraftstoff angereicherte Ladungszone ergibt. Zur Vermeidung solcher an Kraftstoff reicheren Bereiche können beispielsweise die Überströmkanäle 12, 13 von einer im Zylinder 1 vorgesehenen Einströmöffnung 22 ausgehen, die im Hublagenbereich des Kolbens 2 für die geöffneten Überströmkanäle (Fig. 5) den Mantelöffnungen 21 des Kolbens 2 gegenüberliegen, sodass aufgrund der Strömung durch diese Überströmkanäle 12, 13 die Gasbereiche unterhalb des Kolbenbodens 3 erfasst und in den Verbrennungsraum 11 ausgespült werden. Da das Gasgemisch durch diese Überströmkanäle 12, 13 dann einen höheren Kraftstoffanteil aufweist als die Gasgemische in den dem Auslasskanal 4 benachbarten Überströmkanälen 14, 15, kann eine Verringerung der Spülverluste und der damit verbundenen Kohlenwasserstoffemissionen erzielt werden. Ein ähnlicher Effekt tritt auf, wenn die Spülung der Kolbenunterseite über den Aufrichtkanal 16 erfolgt, der dann über eine entsprechende Mantelöffnung im Kolben 2 mit dem Kraftstoffluftgemisch aus dem Kurbelgehäuse 10 gespeist wird.

## Patentansprüche

1. Zweitakt-Verbrennungsmotor mit wenigstens einem einen Kolben (2) aufnehmenden, mit einem Zylinderkopf versehenen Zylinder (1), mit einem Kurbelgehäuse (10), das mit dem Zylinder (1) über Überströmkanäle (12 bis 16) strömungsverbunden ist, die einander symmetrisch bezüglich einer durch die Achse eines Auslasskanals (4) bestimmten Durchmesserebene (5) des Zylinders (1) gegenüberliegen, und mit zwei zu dieser Durchmesserebene (5) symmetrisch angeordneten Einspritzdüsen (6, 7) für Kraftstoff, deren Düsenachsen (8) einander in der unteren Totpunktlage des Kolbens (2) oberhalb des Kolbenbodens (3) in der Durchmesserebene (5) schneiden, **dadurch gekennzeichnet, dass** die Düsenachsen (8) einander auf der vom Auslasskanal (4) abgewandten Seite der Zylinderachse schneiden und zumindest angenähert in Ausströmrichtung (17) der jeweils auf der gegenüberliegenden Seite der Durchmesserebene (5) vorgesehenen Überströmkanäle (12, 13) verlaufen und dass der Kolben (2) auf einer zumindest einer der Einspritzdüsen (6, 7) zugekehrten Umfangsseite eine Mantelöffnung (21) zum Einspritzen von Kraftstoff in das Kurbelgehäuse (10) aufweist.

2. Zweitakt-Verbrennungsmotor nach Anspruch 1, **dadurch gekennzeichnet, dass** auf der dem Auslasskanal (4) diametral gegenüberliegenden Seite des Zylinders (1) ein als Aufrichtkanal (16) ausgebildeter Überströmkanal mit einer gegen den Zylinderkopf gerichteten, in der Durchmesserebene (5) liegenden Ausströmrichtung (19) vorgesehen ist, die oberhalb des Schnittpunkts (9) der Düsenachsen (8) verläuft.

3. Zweitakt-Verbrennungsmotor nach Anspruch 1 oder 2, **dadurch gekennzeichnet, dass** die Düsenachsen (8) der Einspritzdüsen (6, 7) die Zylinderinnenfläche der Höhe nach zwischen den Steuerkanten (20) der Überströmkanäle (12, 13, 14, 15) und des Auslasskanals (4) schneiden.

4. Zweitakt-Verbrennungsmotor nach einem der Ansprüche 1 bis 3, **dadurch gekennzeichnet, dass** wenigstens einer der Überströmkanäle (12 bis 16) von einer im Zylinder (1) vorgesehenen Einströmöffnung (22) ausgeht, die im Hublagenbereich des Kolbens (2) für den geöffneten Überströmkanal (12 bis 16) einer Mantelöffnung (21) des Kolbens (2) gegenüberliegt.

## Claims

1. Two-cycle combustion engine having at least one cylinder (1) receiving a piston (2) and provided with a cylinder head, a crankcase (10) which is in flow connection with the cylinder (1) via transfer ports (12 to 16) which lie symmetrically opposite one another with respect to a diametral plane (5) of the cylinder (1) which is determined by the axis of an outlet port (4), and two injection nozzles (6, 7) for fuel disposed symmetrically with respect to this diametral plane (5), the nozzle axes (8) of which intersect one another above the piston base (3) in the diametral plane (5) when the piston (2) is in the bottom dead centre position, **characterised in that** the nozzle axes (8) intersect one another on the side of the cylinder axis remote from the outlet port (4) and extend at least approximately in the outflow direction (17) of the transfer ports (12, 13) respectively provided on the opposite side of the diametral plane (5), and that the piston (2) comprises a casing opening (21) for injecting fuel into the crankcase (10) on a circumferential side facing at least one of the injection nozzles (6, 7).

2. Two-cycle combustion engine as claimed in claim 1, **characterised in that** a transfer port which is designed as a raising port (16) is provided on the side of the cylinder (1) diametrically opposite the outlet port (4) and has an outflow direction (19) which is directed towards the cylinder head, lies in the diametral plane (5) and extends above the point of intersection (9) of the nozzle axes (8).

3. Two-cycle combustion engine as claimed in claim 1 or 2, **characterised in that** the nozzle axes (8) of the injection nozzles (6, 7) intersect the inner surface of the cylinder vertically between the control edges (20) of the transfer ports (12, 13, 14, 15) and of the outlet port (4).

4. Two-cycle combustion engine as claimed in any one of claims 1 to 3, **characterised in that** at least one of the transfer ports (12 to 16) originates from an intake opening (22) provided in the cylinder (1) and located opposite to a casing opening (21) of the piston (2) in the stroke position region of the piston (2) for the opened transfer port (12 to 16).

## Revendications

1. Moteur à combustion interne à deux temps avec au moins un cylindre (1) logeant un piston (2) et muni d'une tête de cylindre, avec un carter de vilebrequin (10) qui est en communication fluidique avec le cylindre (1) par l'intermédiaire de canaux de transfert (12 à 16), qui sont opposés symétriquement par rapport à un plan diamétral (5) du cylindre (1), déterminé par l'axe d'un canal de sortie (4), et avec deux injecteurs (6, 7) pour le carburant, disposés symétriquement par rapport à ce plan diamétral (5), dont les axes de gicleur (8) se coupent dans la position du point mort inférieur du piston (2) au-dessus du fond de piston (3) dans le plan diamétral (5), **caractérisé en ce que** les axes de gicleur (8) se coupent sur le côté de l'axe du cylindre, opposé au canal de sortie (4), et s'étendent au moins approximativement dans le sens d'écoulement (17) des canaux de transfert (12, 13) prévus respectivement sur le côté opposé du plan diamétral (5) et **en ce que** le piston (2) présente sur un côté périphérique orienté au moins vers un des injecteurs (6, 7), une ouverture d'enveloppe (21) pour injecter le carburant dans le carter de vilebrequin (10).

2. Moteur à combustion interne à deux temps selon la revendication 1, **caractérisé en ce que** sur le côté, opposé diamétralement au canal de sortie (4), du cylindre (1), il est prévu un canal de transfert conçu en tant que canal de redressement (16) avec un sens d'écoulement (19) situé dans le plan diamétral (5) et orienté contre la tête de cylindre, qui est au-dessus du point d'intersection (9) des axes de gicleur (8).

3. Moteur à combustion interne à deux temps selon la revendication 1 ou 2, **caractérisé en ce que** les axes de gicleur (8) des injecteurs (6, 7) coupent la face intérieure du cylindre, vers le haut, entre les arêtes de commande (20) des canaux de transfert (12, 13, 14, 15) et du canal de sortie (4).

4. Moteur à combustion interne à deux temps selon l'une des revendications 1 à 3, **caractérisé en ce qu'**au moins un des canaux de transfert (12 à 16) sort d'une ouverture d'admission (22) prévue dans le cylindre (1) qui est opposée dans la zone de position de la course du piston (2) pour le canal de transfert (12 à 16) ouvert, à une ouverture d'enveloppe (21) du piston (2).
